# EUROPEAN PATENT APPLICATION

(11) **EP 4 317 372 A1**
(43) Date of publication of application: **07.02.2024**
(21) Application number: 22779674.5
(22) Date of filing: 24.02.2022
(51) Int. Cl.: C10M 161/00, C10M 169/04, C10N 20/02, C10N 20/04, C10N 30/02, C10N 40/02, C10N 40/06, C10N 40/08, C10N 40/25, C10M 101/02, C10M 129/68, C10M 145/14

(54) **POLYMER COMPOSITION, LUBRICATING OIL ADDITIVE COMPOSITION, AND LUBRICATING OIL COMPOSITION**

(30) Priority: 31.03.2021 JP 2021062409
(71) Applicant: Idemitsu Kosan Co.,Ltd., Tokyo 100-8321 (JP)
(72) Inventor: TAKASHIMA, Yoriyuki, Sodegaura-shi, Chiba 299-0293 (JP); NAKANO, Taeko, Sodegaura-shi, Chiba 299-0293 (JP); KATO, Shota, Sodegaura-shi, Chiba 299-0293 (JP)
(74) Representative: Hoffmann Eitle
(86) International application number: PCT/JP2022/007492
(87) International publication number: WO 2022/209449

(57) **Abstract**

A problem is to provide a polymer composition that can impart a high viscosity index to a lubricating oil composition, and has a low HTHS viscosity at 80°C, which is the effective temperature range. The problem is solved by a polymer composition containing a comb-shaped polymer (X) containing the following structural units (a) to (c), and a hetero atom-containing base oil (Y), the structural unit (a): a structural unit derived from a short-chain alkyl (meth)acrylate (A) having a short-chain alkyl group having 1 to 5 carbon atoms, the structural unit (b): a structural unit derived from a long-chain alkyl (meth)acrylate (B) having a long-chain alkyl group having 6 to 32 carbon atoms, and the structural unit (c): a structural unit derived from a macromonomer (C), a content of the structural unit (a) being 70% by mass or more based on the total structural units of the comb-shaped polymer (X), the hetero atom-containing base oil (Y) having a kinematic viscosity at 40°C of 25 mm²/s or less.

## Description

### Technical Field

The present invention relates to a polymer composition, a lubricating oil additive composition, and a lubricating oil composition. In more detail, the present invention relates to a polymer composition, a lubricating oil additive composition containing the polymer composition, and a lubricating oil composition containing the polymer composition.

### Background Art

In recent years, lubricating oil compositions used as a drive train oil, such as an automatic transmission fluid (ATF), a continuously variable transmission fluid (CVTF), and a shock absorber fluid (SAF), an internal combustion engine oil, a hydraulic actuation oil, and the like are demanded to have various characteristics corresponding to the applications thereof.

For example, in consideration of the improvement in fuel efficiency of automobiles, it is becoming important to reduce the viscosity of the lubricating oil composition from the standpoint of suppressing the frictional loss in the drive train components and the like and suppressing the agitation loss and the frictional loss in the internal combustion engine and the like, in addition to the improvements of automobiles themselves, such as the reduction in weight of the automobiles and the improvements of engines.

However, the viscosity of a liquid is decreased in increasing the temperature. Therefore, the reduction of the viscosity of the lubricating oil composition tends to increase the boundary lubrication region in a high temperature range. Accordingly, problems including increase in abrasion tend to occur.

Therefore, in reducing the viscosity of the lubricating oil composition, there is a demand of preventing the viscosity decrease causing the aforementioned problems in a high temperature range from occurring. In other words, the lubricating oil composition is demanded to have a high viscosity index.

As an additive for imparting a high viscosity index to a lubricating oil composition, a viscosity index improver has been widely used. For example, PTL 1 describes a comb-shaped polymer based on an alkyl (meth)acrylate as a viscosity index improver.

### Citation List

### Patent Literature

PTL 1: JP 2019-044186 A

### Summary of Invention

In the discussions on the fuel efficiency of a lubricating oil composition, such as an engine oil, it is important to focus on the HTHS viscosity (high temperature high shear viscosity). Specifically, the fuel efficiency of a lubricating oil composition, such as an engine oil, is improved with a lower HTHS viscosity, but a too low HTHS viscosity causes oil film break to increase the friction and the like. Accordingly, it is considered that the HTHS viscosity is desirably reduced as much as possible around 80°C to 100°C, which is the effective temperature range, while securing at least the viscosity that is demanded as the HTHS viscosity at 150°C.

However, the comb-shaped polymer described in PTL 1 is not sufficiently investigated on this point, and still has room for improvement.

A problem to be solved by the present invention is to provide a polymer composition that can impart a high viscosity index to a lubricating oil composition, and can reduce the HTHS viscosity at 80°C, which is the effective temperature range, while securing the viscosity that is demanded as the HTHS viscosity at 150°C.

Another problem to be solved by the present invention is to provide a lubricating oil additive containing the polymer composition, and a lubricating oil composition containing the polymer composition.

### Solution to Problem

The present invention provides the following items [1] to [4].
[1] A polymer composition containing a comb-shaped polymer (X) containing the following structural units (a) to (c), and a hetero atom-containing base oil (Y),
   the structural unit (a): a structural unit derived from a short-chain alkyl (meth)acrylate (A) having a short-chain alkyl group having 1 to 5 carbon atoms,
   the structural unit (b): a structural unit derived from a long-chain alkyl (meth)acrylate (B) having a long-chain alkyl group having 6 to 32 carbon atoms, and
   the structural unit (c): a structural unit derived from a macromonomer (C),
   a content of the structural unit (a) being 70% by mass or more based on the total structural units of the comb-shaped polymer (X),
   the hetero atom-containing base oil (Y) having a kinematic viscosity at 40°C of 25 mm²/s or less.
[2] A lubricating oil additive composition containing the polymer composition according to the item [1],
[3] A lubricating oil composition containing the polymer composition according to the item [1] or the lubricating oil additive composition according to the item [2], and a lubricant base oil (Z).
[4] A method for producing the polymer composition according to the item [1], including
   a step (S1) of polymerizing a short-chain alkyl (meth)acrylate (A) having a short-chain alkyl group having 1 to 5 carbon atoms, a long-chain alkyl (meth)acrylate (B) having a long-chain alkyl group having 6 to 32 carbon atoms, and a macromonomer (C), so as to produce a comb-shaped polymer (X), and
   a step (S2) of dissolving the comb-shaped polymer (X) in a hetero atom-containing base oil (Y),
   in the step (S1), an amount of the short-chain alkyl (meth)acrylate (A) blended being 70% by mass or more based on the total amount of the short-chain alkyl (meth)acrylate (A), the long-chain alkyl (meth)acrylate (B), and the macromonomer (C),
   the hetero atom-containing base oil (Y) having a kinematic viscosity at 40°C of 25 mm²/s or less.

### Advantageous Effects of Invention

The present invention can provide a polymer composition that can impart a high viscosity index to a lubricating oil composition, and can reduce the HTHS viscosity at 80°C, which is the effective temperature range, while securing the viscosity that is demanded as the HTHS viscosity at 150°C.

### Description of Embodiments

The upper limit values and the lower limit values of the numerical values described in the description herein each can be optionally combined. For example, in the case where numerical ranges "A to B" and "C to D" are described, numerical ranges of "A to D" and "C to B" are also encompassed in the scope of the present invention.

The numerical range "(lower limit value) to (upper limit value)" described in the description herein means the lower limit value or more and the upper limit value or less unless otherwise indicated.

In the description herein, the numerals shown in the examples are numerals that can be used as an upper limit value or a lower limit value.

In the description herein, a "(meth)acrylate" means an acrylate or a methacrylate, which is similarly applied to the other analogous terms.

### [Embodiments of Polymer Composition]

The polymer composition of the present embodiment contains a comb-shaped polymer (X) containing the following structural units (a) to (c), and a hetero atom-containing base oil (Y).

The structural unit (a): a structural unit derived from a short-chain alkyl (meth)acrylate (A) having a short-chain alkyl group having 1 to 5 carbon atoms

The structural unit (b): a structural unit derived from a long-chain alkyl (meth)acrylate (B) having a long-chain alkyl group having 6 to 32 carbon atoms

The structural unit (c): a structural unit derived from a macromonomer (C)

The content of the structural unit (a) is 70% by mass or more based on the total structural units of the comb-shaped polymer (X).

The hetero atom-containing base oil (Y) has a kinematic viscosity at 40°C of 25 mm²/s or less.

The present inventors have made earnest investigations for solving the problems. As a result, it has been found that the polymer composition having the aforementioned configuration can solve the problems.

The mechanism that the polymer composition having the aforementioned configuration can solve the problems is still not clear, and for example, can be estimated as follows.
(1) In the comb-shaped polymer (X), the increase of the content ratio of the structural unit (a) having a small steric hindrance derived from the short-chain alkyl (meth)acrylate (A) having a short-chain alkyl group having 1 to 5 carbon atoms allows the comb-shaped polymer (X) to have a contractable structure. As a result, the enhancement of the viscosity index of the lubricating oil composition can be facilitated, and simultaneously the reduction of the viscosity under a high shear condition can also be facilitated.
(2) In the comb-shaped polymer (X), the increase of the content ratio of the structural unit (a) having a small steric hindrance derived from the short-chain alkyl (meth)acrylate (A) having a short-chain alkyl group having 1 to 5 carbon atoms increases the polarity of the comb-shaped polymer (X). Due to the polarity of the hetero atom-containing base oil (Y), the hetero atom-containing base oil (Y) contained in the polymer composition can regulate the comb-shaped polymer (X) into the condition capable of facilitating the exertion of the capability thereof.

In the description hereinafter, the "short-chain alkyl (meth)acrylate (A)", the "long-chain alkyl (meth)acrylate (B)", and the "macromonomer (C)" may be referred to as a "monomer (A)", a "monomer (B)", and a "monomer (C)", respectively.

In the present embodiment, the comb-shaped polymer (X) may be constituted only by the structural unit (a) derived from the monomer (A), the structural unit (b) derived from the monomer (B), and the structural unit (c) derived from the monomer (C), and may contain an additional structural unit other than the structural units (a), (b), and (c) in such a range that does not impair the effects of the present invention.

In the present embodiment, the total content of the structural units (a), (b), and (c) in the comb-shaped polymer (X) is preferably 70% by mol to 100% by mol, more preferably 80% by mol to 100% by mol, and further preferably 90% by mol to 100% by mol, based on the total structural units of the comb-shaped polymer (X).

The monomers (A) to (C) will be described in detail below.

### <Monomer (A) and Structural Unit (a)>

The monomer (A) used in the present embodiment is a short-chain alkyl (meth)acrylate having a short-chain alkyl group having 1 to 5 carbon atoms.

A larger content of the structural unit (a) derived from the monomer (A) can prepare the comb-shaped polymer (X) that can facilitate the reduction of the HTHS viscosity in the effective temperature range (80°C) while securing the viscosity that is demanded as the HTHS viscosity at 150°C.

One kind of the monomer (A) may be used alone, or two or more kinds thereof may be used in combination. Accordingly, the comb-shaped polymer (X) may contain one kind of the structural unit (a) derived from the monomer (A) or may contain two or more kinds thereof.

### <Monomer (A1) and Structural Unit (a1)>

In the present embodiment, the monomer (A) preferably contains a monomer (A1) represented by the following general formula (a-1) from the standpoint of further facilitating the exertion of the effects of the present invention. Accordingly, the structural unit (a) preferably contains a structural unit (a1) derived from the monomer (A1).

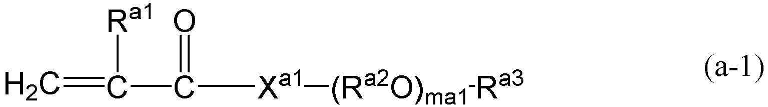

In the general formula (a-1), R^{a1} represents a hydrogen atom or a methyl group.

Monomers having R^{a1} that represents a substituent other than a hydrogen atom and a methyl group are difficult to procure, and the monomers have low reactivity and thus are difficult to polymerize.

R^{a1} preferably represents a methyl group from the standpoint of facilitating the exertion of the effects of the present invention.

In the general formula (a-1), R^{a3} represents a short-chain alkyl group having 1 to 5 carbon atoms.

In the case where the number of carbon atoms of the short-chain alkyl group is 6 or more, it is difficult to exert the effects of the present invention.

Examples of the short-chain alkyl group having 1 to 5 carbon atoms that can be selected as R^{a3} include a methyl group, an ethyl group, a n-propyl group, an isopropyl group, a n-butyl group, an isobutyl group, and a tert-butyl group.

The number of carbon atoms of the short-chain alkyl group that can be selected as R^{a3} is preferably 2 or more and 4 or less, more preferably 3 or more and 4 or less, and further preferably 4, from the standpoint of further facilitating the exertion of the effects of the present invention.

In the general formula (a-1), X^{a1} represents a single bond, a linear or branched alkylene group having 1 to 10 carbon atoms, -O-, or -NH-.

In the general formula (a-1), R^{a2} represents a linear or branched alkylene group having 2 to 4 carbon atoms, and ma1 represents an integer of 0 to 20. In the case where ma1 is 2 or more, plural (R^{a2}O)ₘₐ₁ moieties may be the same as or different from each other. The (R^{a2}O)ₘₐ₁ moiety may include a random bond or a block bond. It is preferred that ma1 = 0.

Examples of the compound that is preferred as the monomer (A1) include methyl (meth)acrylate, ethyl (meth)acrylate, n-propyl (meth)acrylate, isopropyl (meth)acrylate, n-butyl (meth)acrylate, isobutyl (meth)acrylate, and tert-butyl (meth)acrylate, and among these, n-butyl (meth)acrylate is preferred.

One kind of the structural unit (a1) derived from the monomer (A1) may be contained, or two or more kinds thereof may be contained.

### (Content of Structural Unit (a1))

In the present embodiment, the content of the structural unit (a1) is preferably 50% by mol to 100% by mol, more preferably 60% by mol to 100% by mol, further preferably 70% by mol to 100% by mol, still further preferably 80% by mol to 100% by mol, and still more further preferably 90% by mol to 100% by mol, based on the total structural units of the structural unit (a).

### <Monomer (B) and Structural Unit (b)>

The monomer (B) used in the present embodiment is a long-chain alkyl (meth)acrylate having a long-chain alkyl group having 6 to 32 carbon atoms.

The structural unit (b) derived from the monomer (B) mainly has a function of exerting oil solubility in the comb-shaped polymer (X).

One kind of the monomer (B) may be used alone, or two or more kinds thereof may be used in combination. Accordingly, the comb-shaped polymer (X) may contain one kind of the structural unit (b) derived from the monomer (B) or may contain two or more kinds thereof.

### <Monomer (B1) and Structural Unit (b1)>

In the present embodiment, the monomer (B) preferably contains a monomer (B1) represented by the following general formula (b-1) from the standpoint of further facilitating the exertion of the effects of the present invention. Accordingly, the structural unit (b) preferably contains a structural unit (b1) derived from the monomer (B1).

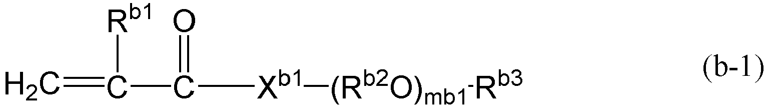

In the general formula (b-1), R^{b1} represents a hydrogen atom or a methyl group.

Monomers having R^{b1} that represents a substituent other than a hydrogen atom and a methyl group are difficult to procure, and the monomers have low reactivity and thus are difficult to polymerize.

R^{b1} preferably represents a methyl group from the standpoint of facilitating the exertion of the effects of the present invention.

In the general formula (b-1), R^{b3} represents a long-chain alkyl group having 6 to 32 carbon atoms.

In both the case where the number of carbon atoms of the long-chain alkyl group is less than 6, and the case where the number of carbon atoms thereof is more than 32, it is difficult to exert the oil solubility.

Examples of the long-chain alkyl group having 6 to 32 carbon atoms that can be selected as R^{b3} include a linear or branched alkyl group, such as a decyl group, an undecyl group, a dodecyl group, a tridecyl group, a tetradecyl group, a pentadecyl group, a hexadecyl group, a heptadecyl group, an octadecyl group, a nonadecyl group, an icosyl group, a tetracosyl group, and a 2-decyltetradecyl group.

In the case where R^{b3} represents a branched long-chain alkyl group, the number of carbon atoms of the long-chain alkyl group is preferably 8 to 32.

The number of carbon atoms of the long-chain alkyl group is preferably 10 or more and 20 or less, and more preferably 10 or more and 16 or less, from the standpoint of further facilitating the exertion of the effects of the present invention.

In the general formula (b-1), X^{b1} represents a single bond, a linear or branched alkylene group having 1 to 10 carbon atoms, -O-, or -NH-. X^{b1} preferably represents -O- from the standpoint of facilitating the exertion of the effects of the present invention.

In the general formula (b-1), R^{b2} represents a linear or branched alkylene group having 2 to 4 carbon atoms, and mb1 represents an integer of 0 to 20. In the case where mb1 is 2 or more, plural (R^{b2}O)_{mb1} moieties may be the same as or different from each other. The (R^{b2}O)_{mb1} moiety may include a random bond or a block bond. It is preferred that mb1 = 0.

Examples of the compound that is preferred as the monomer (B1) include n-decyl (meth)acrylate, n-undecyl (meth)acrylate, n-dodecyl (meth)acrylate, n-tridecyl (meth)acrylate, n-tetradecyl (meth)acrylate, n-pentadecyl (meth)acrylate, and n-hexadecyl (meth)acrylate, and among these, n-dodecyl (meth)acrylate and n-tridecyl (meth)acrylate are preferred, and it is more preferred to use n-dodecyl (meth)acrylate and n-tridecyl (meth)acrylate in combination.

One kind of the structural unit (b 1) derived from the monomer (B1) may be contained, or two or more kinds thereof may be contained.

### (Content of Structural Unit (b1))

In the present embodiment, the content of the structural unit (b1) is preferably 50% by mol to 100% by mol, more preferably 60% by mol to 100% by mol, further preferably 70% by mol to 100% by mol, still further preferably 80% by mol to 100% by mol, and still more further preferably 90% by mol to 100% by mol, based on the total structural units of the structural unit (b).

### <Monomer (C) and Structural Unit (c)>

A "comb-shaped polymer" has a structure having a main chain including multiple trident branches, from each of which a high molecular weight side chain is branched. The monomer (C) used in the present embodiment is a macromonomer that is necessary for forming the structure of the comb-shaped polymer. Specifically, the high molecular weight side chain of the monomer (C) becomes the high molecular weight side chain of the comb-shaped polymer (X), thereby forming the characteristic structure of the comb-shaped polymer.

One kind of the monomer (C) may be used alone, or two or more kinds thereof may be used in combination. Accordingly, the comb-shaped polymer (X) may contain one kind of the structural unit (c) derived from the monomer (C) or may contain two or more kinds thereof.

The number average molecular weight (Mn) of the monomer (C) is preferably 500 or more, more preferably 1,000 or more, further preferably 1,500 or more, and still further preferably 2,000 or more, and is preferably 50,000 or less, more preferably 20,000 or less, and further preferably 10,000 or less, from the standpoint of the solubility in the base oil, the viscosity index, and the shear stability.

### <Monomer (C1) and Structural Unit (c1)>

In the present embodiment, the monomer (C) preferably contains a monomer (C1) represented by the following general formula (c-1) from the standpoint of further facilitating the exertion of the effects of the present invention. Accordingly, the structural unit (c) preferably contains a structural unit (c1) derived from the monomer (C1).

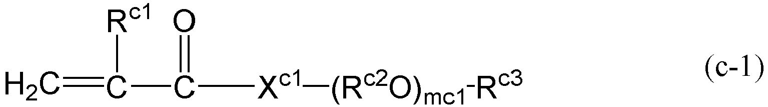

In the general formula (c-1), R^{c1} represents a hydrogen atom or a methyl group.

Monomers having R^{c1} that represents a substituent other than a hydrogen atom and a methyl group are difficult to procure, and the monomers have low reactivity and thus are difficult to polymerize.

R^{c1} preferably represents a methyl group from the standpoint of facilitating the exertion of the effects of the present invention.

In the general formula (c-1), R^{c3} corresponds to the high molecular weight side chain of the comb-shaped polymer (X), and is a polymer containing a repeating unit of an alkylene group.

The alkylene group may be a linear group or a branched group, and is preferably a branched group from the standpoint of suppressing crystallization at a low temperature to prevent thickening in the use as a viscosity index improver. The branched hydrocarbon group preferably contains a branched alkylene group as repeating units, and more preferably contains both a branched alkylene group and a linear alkylene group as repeating units. Examples of the branched alkylene group include a 1,2-propylene group, a 1,2-butylene group, a 1,3-butylene group, a 2,3-butylene group, and a 1,2-hexylene group. Examples of the linear alkylene group include an ethylene, a 1,3-propylene group, a 1,4-butylene group, a 1,5-pentylene group, and a 1,6-hexylene group.

Among these, the polymer preferably has a 1,2-butylene group and/or a 1,4-butylene group as repeating units.

The number of carbon atoms of the hydrocarbon group represented by R^{c3} is preferably 35 or more, more preferably 50 or more, further preferably 70 or more, and still further preferably 100 or more, and is preferably 3,500 or less, more preferably 1,500 or less, and further preferably 700 or less.

In the general formula (c-1), X^{c1} represents a single bond, a linear or branched alkylene group having 1 to 10 carbon atoms, -O-, or -NH-. X^{c1} preferably represents -O- from the standpoint of facilitating the exertion of the effects of the present invention.

In the general formula (c-1), R^{c2} represents a linear or branched alkylene group having 2 to 4 carbon atoms, and mc1 represents an integer of 0 to 20. In the case where mc1 is 2 or more, plural (R^{c2}O)_{mc1} moieties may be the same as or different from each other. The (R^{c2}O)_{mc1} moiety may include a random bond or a block bond. It is preferred that mc1 = 0.

One kind of the structural unit derived from the macromonomer (C) may be contained in the comb-shaped polymer (A), and two or more kinds thereof may be contained therein.

### (Content of Structural Unit (c1))

In the present embodiment, the content of the structural unit (c1) is preferably 50% by mol to 100% by mol, more preferably 60% by mol to 100% by mol, further preferably 70% by mol to 100% by mol, still further preferably 80% by mol to 100% by mol, and still more further preferably 90% by mol to 100% by mol, based on the total structural units of the structural unit (c).

### <Content of Structural Unit (a) (% by mass)>

In the present embodiment, the content (% by mass) of the structural unit (a) derived from the monomer (A) is necessarily 70% by mass or more based on the total structural units of the comb-shaped polymer (X).

In the case where the content of the structural unit (a) is less than 70% by mass, it is difficult to reduce the HTHS viscosity in the effective temperature range (80°C).

The content of the structural unit (a) is preferably 72% by mass or more, more preferably 75% by mass or more, and further preferably 80.0% by mass or more, based on the total structural units of the comb-shaped polymer (X), from the standpoint of facilitating the reduction of the HTHS viscosity in the effective temperature range (80°C). The content thereof is preferably 90% by mass or less, and more preferably 85% by mass or less, from the standpoint of facilitating the enhancement of the viscosity index.

The upper limit values and the lower limit values of these numerical ranges may be optionally combined. Specifically, the content thereof is preferably 72% by mass to 90% by mass, more preferably 75% by mass to 90% by mass, and further preferably 80% by mass to 85% by mass.

### <Content of Structural Unit (a) (% by mol)>

In the present embodiment, the content (% by mol) of the structural unit (a) derived from the monomer (A) is preferably 90.0% by mol or more, more preferably 91.0% by mol or more, further preferably 92.0% by mol or more, still further preferably 93.0% by mol or more, still more further preferably 94.0% by mol or more, and still more further preferably 95% by mol or more, based on the total structural units of the comb-shaped polymer (X), from the standpoint of facilitating the reduction of the HTHS viscosity in the effective temperature range (80°C). The content thereof is preferably 97.0% by mol or less, and more preferably 96.0% by mol or less, from the standpoint of facilitating the enhancement of the viscosity index.

The upper limit values and the lower limit values of these numerical ranges may be optionally combined. Specifically, the content thereof is preferably 90.0% by mol to 97.0% by mol, more preferably 91.0% by mol to 97.0% by mol, further preferably 92.0% by mol to 97.0% by mol, still further preferably 93.0% by mol to 96.0% by mol, still more further preferably 94.0% by mol to 96.0% by mol, and still more further preferably 95.0% by mol to 96.0% by mol.

In the description herein, the content ratios of the structural units in the comb-shaped polymer (X) generally agree with the ratios (charge ratios) of the monomers constituting the comb-shaped polymer (X), respectively.

### <Content of Structural Unit (b) (% by mass)>

In the present embodiment, the content (% by mass) of the structural unit (b) derived from the monomer (B) is preferably 3% by mass or more, more preferably 4% by mass or more, and further preferably 5% by mass or more, based on the total structural units of the comb-shaped polymer (X), from the standpoint of securing the oil solubility. The content thereof is preferably 12% by mass or less, more preferably 10% by mass or less, and further preferably 9% by mass or less.

The upper limit values and the lower limit values of these numerical ranges may be optionally combined. Specifically, the content thereof is preferably 3% by mass to 12% by mass, more preferably 4% by mass to 10% by mass, and further preferably 5% by mass to 9% by mass.

### <Content of Structural Unit (b) (% by mol)>

In the present embodiment, the content (% by mol) of the structural unit (b) derived from the monomer (B) based on the total structural units of the comb-shaped polymer (X), from the standpoint of securing the oil solubility is preferably 3.0% by mol or more, and more preferably 3.5% by mol or more, and is preferably 7.0% by mol or less, more preferably 6.5% by mol or less, and further preferably 6.0% by mol or less.

The upper limit values and the lower limit values of these numerical ranges may be optionally combined. Specifically, the content thereof is preferably 3.0% by mol to 7.0% by mol, more preferably 3.0% by mol to 6.5% by mol, and further preferably 3.5% by mol to 6.0% by mol.

### <Content of Structural Unit (c) (% by mass)>

In the present embodiment, the content (% by mass) of the structural unit (c) derived from the monomer (C) is preferably 5% by mass or more, more preferably 7% by mass or more, and further preferably 10% by mass or more, based on the total structural units of the comb-shaped polymer (X), from the standpoint of further facilitating the exertion of the effects of the present invention. The content thereof is preferably 25% by mass or less, more preferably 20% by mass or less, and further preferably 15% by mass or less.

The upper limit values and the lower limit values of these numerical ranges may be optionally combined. Specifically, the content thereof is preferably 5% by mass to 25% by mass, more preferably 7% by mass to 20% by mass, and further preferably 10% by mass to 15% by mass.

### <Content of Structural Unit (c) (% by mol)>

In the present embodiment, the content (% by mol) of the structural unit (c) derived from the monomer (C) is preferably 0.1% by mol or more, more preferably 0.2% by mol or more, and further preferably 0.25% by mol or more, based on the total structural units of the comb-shaped polymer (X), from the standpoint of further facilitating the exertion of the effects of the present invention. The content thereof is preferably 2.0% by mol or less, more preferably 1.0% by mol or less, and further preferably 0.5% by mol or less.

The upper limit values and the lower limit values of these numerical ranges may be optionally combined. Specifically, the content thereof is preferably 0.1% by mol to 2.0% by mol, more preferably 0.2% by mol to 1.0% by mol, and further preferably 0.25% by mol to 0.5% by mol.

### <Additional Monomer>

The comb-shaped polymer (X) may contain a structural unit derived from an additional monomer, in addition to the structural units (a), (b), and (c), in such a range that does not impair the effects of the present invention. Examples of the additional monomer include a functional group-containing monomer other than the monomers (A), (B), and (C). Examples of the additional functional group-containing monomer include a functional group-containing (meth)acrylate other than the monomers (A), (B), and (C).

Examples of the functional group-containing (meth)acrylate include methoxyethyl (meth)acrylate, methylthiomethyl (meth)acrylate, cyanoethyl (meth)acrylate, and 2,2,3,3,4,4,4-heptafluorobutyl methacrylate.

In the comb-shaped polymer (X), however, the content of the structural unit derived from the functional group-containing monomer other than the monomers (A), (B), and (C) is preferably less than 30% by mol, more preferably less than 20% by mol, further preferably less than 10% by mol, still further preferably less than 1% by mol, and still more further preferably less than 0.1% by mol, based on the total structural units of the comb-shaped polymer (X), from the standpoint of further facilitating the exertion of the effects of the present invention.

### <Properties and Polymerization Mode of Comb-shaped Polymer (X)>

### (Mass Average Molecular Weight (Mw) and Molecular Weight Distribution (Mw/Mn))

The mass average molecular weight (Mw) of the comb-shaped polymer (X) of the present embodiment is preferably 100,000 or more, more preferably 120,000 or more, and further preferably 140,000 or more. The mass average molecular weight thereof is preferably 900,000 or less, more preferably 870,000 or less, and further preferably 850,000 or less.

The upper limit values and the lower limit values of these numerical ranges may be optionally combined. Specifically, the mass average molecular weight thereof is preferably 100,000 to 900,000, more preferably 120,000 to 870,000, and further preferably 140,000 to 850,000.

The molecular weight distribution (Mw/Mn) of the comb-shaped polymer (X) of the present embodiment is preferably 3.50 or less, more preferably 3.20 or less, and further preferably 3.00 or less. The molecular weight distribution thereof is generally 1.01 or more.

The mass average molecular weight (Mw) and the molecular weight distribution (Mw/Mn) are values that are measured or calculated according to the method shown in the examples described later.

### (Polymerization Mode)

The polymerization mode of the comb-shaped polymer (X) of the present embodiment is not particularly limited, and may be any of block copolymerization, random copolymerization, and block-random copolymerization.

### <Hetero Atom-containing Base Oil (Y)>

The polymer composition of the present embodiment contains a hetero atom-containing base oil (Y).

The hetero atom-containing base oil (Y) contained can regulate the comb-shaped polymer (X) into the condition capable of facilitating the exertion of the capability thereof.

The hetero atom-containing base oil (Y) is a base oil formed of a compound having a hetero atom in the molecular skeleton thereof. The "hetero atom" referred herein means an atom other than carbon and hydrogen, and examples thereof include a nitrogen atom, an oxygen atom, and a sulfur atom.

Examples of the hetero atom-containing base oil (Y) include an alcohol, an ester, an ether, an amide, a ketone, and a thioether. Among these, the hetero atom-containing base oil (Y) is preferably one or more kind selected from the group consisting of an ester, an ether, an amide, a ketone, and a thioether, and more preferably one or more kind selected from the group consisting of an ester, an ether, and an amide, from the standpoint of the effects of the present invention, and is further preferably an ester from the standpoint of the availability.

Examples of the ester include various esters, such as a monoester, a diester, and a polyester.

Examples of the monoester include decyl decanoate and 2-ethylhexyl caprylate.

Examples of the diester include bis(2-ethylhexyl) sebacate, bis(2-ethylhexyl) adipate, and dibutyl adipate.

Examples of the polyester include a full ester or a partial ester of a trihydric or higher polyhydric alcohol, such as trimethylolpropane, and a carboxylic acid, such as lauric acid, myristic acid, palmitic acid, stearic acid, and oleic acid. The polyester is preferably one or more kind selected from a full ester of trimethylolpropane and a partial ester of trimethylolpropane, more preferably one or more kind selected from a full ester of trimethylolpropane and one or more kind selected from stearic acid and lauric acid and a partial ester of trimethylolpropane and one or more kind selected from stearic acid and lauric acid, and further preferably a full ester of trimethylolpropane and one or more kind selected from stearic acid and lauric acid.

Among the esters described above, one or more kind selected from the group consisting of bis(2-ethylhexyl) sebacate, bis(2-ethylhexyl) adipate, and a trimethylolpropane ester is preferred.

Examples of the ether include bis(2-ethylhexyl) ether and a polyvinyl ether. The polyvinyl ether is preferably trimer to pentamer of a polyvinyl ether. Among these, bis(2-ethylhexyl) ether is preferred.

Examples of the amide include N,N-di(2-ethylhexyl)-2-ethylhexaneamide.

The hetero atom-containing base oil (Y) necessarily has a kinematic viscosity at 40°C of 25 mm²/s or less. In the case where the 40°C kinematic viscosity exceeds 25 mm²/s, there are cases where the viscosity index of the comb-shaped polymer (X) cannot be sufficiently enhanced.

The 40°C kinematic viscosity of the hetero atom-containing base oil (Y) is preferably 20 mm²/s or less, more preferably 15 mm²/s or less, and further preferably 12 mm²/s or less, from the standpoint of further facilitating the enhancement of the viscosity index of the comb-shaped polymer (X). The 40°C kinematic viscosity thereof is preferably 1.5 mm²/s or more, more preferably 3.0 mm²/s or more, and further preferably 5.0 mm²/s or more, from the standpoint of the availability.

The upper limit values and the lower limit values of these numerical ranges may be optionally combined. Specifically, the 40°C kinematic viscosity thereof is preferably 1.5 mm²/s to 20 mm²/s, more preferably 3.0 mm²/s to 15 mm²/s, and further preferably 5.0 mm²/s to 12 mm²/s.

### [Method for producing Polymer Composition]

The method for producing a polymer composition of the present embodiment includes
a step (S 1) of polymerizing a short-chain alkyl (meth)acrylate (A) having a short-chain alkyl group having 1 to 5 carbon atoms, a long-chain alkyl (meth)acrylate (B) having a long-chain alkyl group having 6 to 32 carbon atoms, and a macromonomer (C), so as to produce a comb-shaped polymer (X), and
a step (S2) of dissolving the comb-shaped polymer (X) in a hetero atom-containing base oil (Y),
in the step (S1), the amount of the short-chain alkyl (meth)acrylate (A) blended is 70% by mass or more based on the total amount of the short-chain alkyl (meth)acrylate (A), the long-chain alkyl (meth)acrylate (B), and the macromonomer (C), and
the hetero atom-containing base oil (Y) has a kinematic viscosity at 40°C of 25 mm²/s or less.
The step (S 1) and the step (S2) will be described in detail below.

### <Step (S 1)>

In the step (S 1), the comb-shaped polymer (X) is produced.

The comb-shaped polymer (X) can be obtained, for example, by radically polymerizing the short-chain alkyl (meth)acrylate (A) having a short-chain alkyl group having 1 to 5 carbon atoms, the long-chain alkyl (meth)acrylate (B) having a long-chain alkyl group having 6 to 32 carbon atoms, and the macromonomer (C).

The polymerization method used may be a known method, such as a solution polymerization method, an emulsion polymerization method, a suspension polymerization method, an inverse suspension polymerization method, a thin film polymerization method, and a spray polymerization method, and among these, a solution polymerization method is preferred, by which the monomer (A), the monomer (B), and the monomer (C) are radically polymerized in a solvent to obtain the comb-shaped polymer (X).

In the case where the comb-shaped polymer (X) is produced by solution polymerization, the comb-shaped polymer (X) can be obtained by radically polymerizing the monomer (A), the monomer (B), and the monomer (C) with a polymerization initiator in a polymerization solvent.

### (Amount of Monomer (A) blended)

The amount of the monomer (A) blended is necessarily 70% by mass or more based on the total amount of the monomers (A) to (C) (or based on the total amount of the monomers (A) to (C) and the additional monomer in the case where the comb-shaped polymer (X) contains the structural unit derived from the additional monomer).

In the case where the amount of the monomer (A) blended is less than 70% by mass, the content of the structural unit (a) in the comb-shaped polymer (X) cannot be 90% by mol or more.

The amount of the monomer (A) blended is preferably 72% by mass or more, more preferably 75% by mass or more, and further preferably 80.0% by mass or more, based on the total amount of the monomers (A) to (C), from the standpoint of facilitating the reduction of the HTHS viscosity in the effective temperature range (80°C). The amount thereof blended is preferably 90% by mass or less, and more preferably 85% by mass or less, form the standpoint of facilitating the enhancement of the viscosity index.

The upper limit values and the lower limit values of these numerical ranges may be optionally combined. Specifically, the amount thereof blended is preferably 72% by mass to 90% by mass, more preferably 75% by mass to 90% by mass, and further preferably 80% by mass to 85% by mass.

### (Amount of Monomer (B) blended)

In the present embodiment, the amount of the monomer (B) blended is preferably 3% by mass or more, more preferably 4% by mass or more, and further preferably 5% by mass or more, based on the total amount of the monomers (A) to (C) (or based on the total amount of the monomers (A) to (C) and the additional monomer in the case where the comb-shaped polymer (X) contains the structural unit derived from the additional monomer), from the standpoint of securing the oil solubility of the comb-shaped polymer (X). The amount thereof blended is preferably 12% by mass or less, more preferably 10% by mass or less, and further preferably 9% by mass or less.

The upper limit values and the lower limit values of these numerical ranges may be optionally combined. Specifically, the amount thereof blended is preferably 3% by mass to 12% by mass, more preferably 4% by mass to 10% by mass, and further preferably 5% by mass to 9% by mass.

### (Amount of Monomer (C) blended)

In the present embodiment, the amount of the monomer (C) blended is preferably 5% by mass or more, more preferably 7% by mass or more, and further preferably 10% by mass or more, based on the total amount of the monomers (A) to (C) (or based on the total amount of the monomers (A) to (C) and the additional monomer in the case where the comb-shaped polymer (X) contains the structural unit derived from the additional monomer), from the standpoint of further facilitating the exertion of the effects of the present invention. The amount thereof blended is preferably 25% by mass or less, more preferably 20% by mass or less, and further preferably 15% by mass or less.

The upper limit values and the lower limit values of these numerical ranges may be optionally combined. Specifically, the amount thereof blended is preferably 5% by mass to 25% by mass, more preferably 7% by mass to 20% by mass, and further preferably 10% by mass to 15% by mass.

### (Polymerization Solvent)

The polymerization solvent used is preferably the hetero atom-containing base oil (Y). The use of the hetero atom-containing base oil (Y) as the polymerization solvent can provide the comb-shaped polymer (X) that can further facilitate the exertion of the effects of the present invention. Furthermore, the content of the structural unit (a) derived from the monomer (A) can be easily increased, and thus the effect of reducing the HTHS viscosity in the effective temperature range (80°C) can also be easily obtained.

In the present embodiment, however, it has been confirmed that even in the case where the comb-shaped polymer (X) is obtained by using a polymerization solvent other than the hetero atom-containing base oil (Y), the similar effects as in the case where the hetero atom-containing base oil (Y) is used as the polymerization solvent can be obtained by mixing the comb-shaped polymer (X) and the hetero atom-containing base oil (Y) to form the polymer composition. Therefore, in the present embodiment, a polymerization solvent other than the hetero atom-containing base oil (Y) can be used.

The polymerization solvent other than the hetero atom-containing base oil (Y) may be a solvent that can dissolve the monomers, and examples thereof used include a mineral oil; an aromatic hydrocarbon-based solvent, such as toluene, xylene, and an alkylbenzene having 9 to 10 carbon atoms; and an aliphatic hydrocarbon-based solvent having 5 to 18 carbon atoms, such as pentane, hexane, heptane, cyclohexane, and octane.

### (Polymerization Initiator)

Examples of the polymerization initiator include one or more kind selected from the group consisting of an azo-based initiator, a peroxide-based initiator, a redox-based initiator, and an organohalogen compound initiator. The polymerization initiator used is preferably one or more kind selected from an azo-based initiator and a peroxide-based initiator, more preferably one or more kind selected from an azo-based initiator and an organic peroxide, and further preferably an organic peroxide.

Examples of the azo-based polymerization initiator include 2,2'-azobis(isobutyronitrile) (abbreviation: AIBN), 2,2'-azobis(2-methylbutyronitrile) (abbreviation: AMBN), 2,2'-azobis(2,4-dimethylvaleronitrile) (abbreviation: ADVN), 4,4'-azobis(4-cyanovaleric acid) (abbreviation: ACVA) and a salt thereof (such as a hydrochloride), dimethyl 2,2'-azobisisobutyrate, 2,2'-azobis(2-amidinopropane) hydrochloride, and 2,2'-azobis(2-methyl-N-(2-hydroxyethyl)propionamide).

Examples of the peroxide-based initiator include an inorganic peroxide and an organic peroxide.

Examples of the inorganic peroxide include hydrogen peroxide, ammonium persulfate, potassium persulfate, and sodium persulfate.

Examples of the organic peroxide include benzoyl peroxide, di-tert-butyl peroxide, cumene hydroperoxide, succinic peroxide, di(2-ethoxyethyl) peroxydicarbonate, tert-butyl peroxypivalate, tert-hexyl peroxypivalate, tert-butyl peroxyneoheptanoate, tert-butyl peroxyneodecanoate, tert-butyl peroxy-2-ethylhexanoate, tert-butyl peroxyisobutyrate, tert-amyl peroxy-2-ethylhexanoate, 1,1,3,3-tetramethylbutyl peroxy-2-ethylhexanoate, dibutyl peroxytrimethyladipate, 2,2-bis(4,4-di-t-butylperoxycyclohexyl)propane, and lauryl peroxide.

Examples of the redox-based initiator include combinations of a reducing agent, such as a sulfite or a bisulfite of an alkali metal (e.g., ammonium sulfite and ammonium bisulfite), ferrous chloride, ferrous sulfate, and ascorbic acid, and an oxidant, such as a persulfate of an alkali metal, ammonium persulfate, hydrogen peroxide, and an organic peroxide.

The amount of the polymerization initiator used may be appropriately selected in consideration of the properties of the target polymer (such as the regulation of the molecular weight).

### (Chain Transfer Agent)

In the radical polymerization, a known chain transfer agent may be used depending on necessity for such purposes as regulating the properties, such as the molecular weight, of the polymer.

Examples of the chain transfer agent include a mercaptan compound, a thiocarboxylic acid compound, a secondary alcohol compound, such as isopropanol, an amine compound, such as dibutylamine, a hypophosphite compound, such as sodium hypophosphite, a chlorine-containing compound, and an alkylbenzene compound.

Examples of the mercaptan compound include an alkylmercaptan compound having an alkyl group having 2 to 20 carbon atoms, such as n-butylmercaptan, isobutylmercaptan, n-octylmercaptan, n-dodecylmercaptan, sec-butylmercaptan, tert-butylmercaptan, and tert-dodecylmercaptan; and a hydroxy group-containing mercaptan compound, such as mercaptoethanol and mercaptopropanol.

Examples of the thiocarboxylic acid compound include thioglycolic acid and thiomalic acid.

The amount of the chain transfer agent used may be appropriately selected in consideration of the properties of the target polymer (such as the regulation of the molecular weight).

### (Method for Polymerization Control)

Examples of the method for polymerization control include an adiabatic polymerization method and a temperature programmed polymerization method. The reaction temperature in polymerization is preferably 30 to 140°C, more preferably 50 to 130°C, and further preferably 70°C to 120°C.

In addition to the method of initiating polymerization with heat, a method of initiating polymerization through irradiation of a radioactive ray, an electron beam, an ultraviolet ray, or the like may also be used. A solution polymerization method with temperature programming is preferred.

In the case where copolymerization is performed, either random addition polymerization or alternating copolymerization may be employed, and either graft copolymerization or block copolymerization may be employed.

### <Step (S2)>

In the step (S2), the comb-shaped polymer (X) is dissolved in the hetero atom-containing base oil (Y) to produce a polymer composition containing the comb-shaped polymer (X) and the hetero atom-containing base oil (Y).

In the case where the hetero atom-containing base oil (Y) is used as the polymerization solvent in the step (S1), the state where the comb-shaped polymer (X) is dissolved in the hetero atom-containing base oil (Y) without removing the polymerization solvent may omit the step (S2). However, the step (S2) may be performed from the standpoint of regulating the content of the hetero atom-containing base oil (Y).

Accordingly, whether or not the step (S2) is performed may be selected depending on the polymerization solvent used in the step (S1), and in the case where the hetero atom-containing base oil (Y) is used as the polymerization solvent, the step (S2) may be performed or may not be performed. In the case where a polymerization solvent other than the hetero atom-containing base oil (Y) is used, the step (S2) is necessarily performed.

However, in the case of assuming the use of a base oil containing the hetero atom-containing base oil (Y) as a lubricant base oil constituting the lubricating oil composition, the hetero atom-containing base oil (Y) may not be used as the polymerization solvent in the step (S1), and the step (S2) may not be performed.

### <Content of Comb-shaped Polymer (X) in Polymer Composition>

The polymer composition of the present embodiment contains the comb-shaped polymer (X) and the hetero atom-containing base oil (Y).

The content of the comb-shaped polymer (X) in terms of resin content is preferably 0.1% by mass or more, more preferably 1.0% by mass or more, and further preferably 5% by mass or more, and is preferably 50% by mass or less, more preferably 40% by mass or less, and further preferably 30% by mass or less, based on the total amount of the polymer composition, from the standpoint of further facilitating the exertion of the effects of the present invention in adding to a lubricant base oil.

The upper limit values and the lower limit values of these numerical ranges may be optionally combined. Specifically, the content thereof is preferably 0.1% by mass to 50% by mass, more preferably 1.0% by mass to 40% by mass, and further preferably 5.0 to 30% by mass.

However, in the case of assuming the use of a base oil containing the hetero atom-containing base oil (Y) as a lubricant base oil constituting the lubricating oil composition, the polymer composition may not contain the hetero atom-containing base oil (Y), but may contain the comb-shaped polymer (X) and a base oil other than the hetero atom-containing base oil (Y).

### (Contents of Structural Units in Case where Polymerization Solvent other than Hetero Atom-containing Base Oil (Y) is used)

Preferred ranges of the contents of the structural units in the case where a polymerization solvent other than the hetero atom-containing base oil (Y) is used will be shown below.

The preferred ranges of the configuration of the structural units in the comb-shaped polymer (X), the structural unit derived from the additional monomer, the properties and the polymerization mode of the comb-shaped polymer (X), and the like have been described above.

### - Content of Structural Unit (a) -

The content (% by mass) of the structural unit (a) derived from the monomer (A) is necessarily 70% by mass or more based on the total structural units of the comb-shaped polymer (X), as described above.

The content (% by mass) of the structural unit (a) derived from the monomer (A) is preferably 71% by mass or more, and more preferably 72% by mass or more, based on the total structural units of the comb-shaped polymer (X), from the standpoint of facilitating the reduction of the HTHS viscosity in the effective temperature range (80°C). The content thereof is preferably less than 77% by mass, more preferably 75% by mass or less, and further preferably 74% by mass or less, from the standpoint of facilitating the polymerization of the comb-shaped polymer (X) and the standpoint of facilitating the enhancement of the viscosity index.

The content (% by mol) of the structural unit (a) derived from the monomer (A) may be 90.0% by mol or more, is preferably 91.0% by mol or more, more preferably 92.0% by mol or more, and further preferably 93.0% by mol or more, based on the total structural units of the comb-shaped polymer (X). The content thereof is preferably 95.0% by mol or less.

### - Content of Structural Unit (b) -

The content (% by mass) of the structural unit (b) derived from the monomer (B) is preferably more than 5% by mass, more preferably 6% by mass or more, and further preferably 7% by mass or more, based on the total structural units of the comb-shaped polymer (X), from the standpoint of facilitating the polymerization of the comb-shaped polymer (X) and the standpoint of securing the oil solubility of the comb-shaped polymer (X). The content thereof is preferably 11% by mass or less, more preferably 10% by mass or less, and further preferably 9% by mass or less.

The content (% by mol) of the structural unit (b) derived from the monomer (B) is preferably 5.0% by mol or more based on the total structural units of the comb-shaped polymer (X). The content thereof is preferably 8.0% by mol or less, more preferably 7.0% by mol or less, and further preferably 6.0% by mol or less.

### - Content of Structural Unit (c) -

The content (% by mass) of the structural unit (c) derived from the monomer (C) is preferably more than 15% by mass, more preferably 16% by mass or more, further preferably 17% by mass or more, and still further preferably 18% by mass or more, based on the total structural units of the comb-shaped polymer (X), from the standpoint of facilitating the polymerization of the comb-shaped polymer (X) and the standpoint of further facilitating the exertion of the effects of the present invention. The content thereof is preferably 22% by mass or less, more preferably 21% by mass or less, and further preferably 20% by mass or less.

The content (% by mol) of the structural unit (c) derived from the monomer (C) is preferably 0.4% by mol or more based on the total structural units of the comb-shaped polymer (X). The content thereof is preferably 0.7% by mol or less, and more preferably 0.6% by mol or less.

In the description herein, the content ratios of the structural units in the comb-shaped polymer (X) generally agree with the ratios (charge ratios) of the monomers constituting the comb-shaped polymer (X), respectively, as described above.

Accordingly, the contents of the structural units (a) to (c) (based on the total structural units of the comb-shaped polymer (X)) correspond to the amounts of the monomers (A) to (C) blended based on the total amount of the monomers (A) to (C) (based on the total amount of the monomers (A) to (C) and the additional monomer in the case where the comb-shaped polymer (X) contains the structural unit derived from the additional monomer).

### <Applications of Polymer Composition>

The polymer composition of the present embodiment can impart a high viscosity index to a lubricating oil composition, and therefore is useful as a viscosity index improver.

Accordingly, the present embodiment provides a use method including using the polymer composition of the present embodiment as a viscosity index improver composition.

### [Lubricating Oil Composition]

The lubricating oil composition of the present embodiment contains the polymer composition containing the comb-shaped polymer (X), and a lubricant base oil.

The content of the polymer composition is regulated to make a content of the comb-shaped polymer (X) (in terms of resin content) of preferably 0.1% by mass or more, more preferably 0.2% by mass or more, and further preferably 0.3% by mass or more, based on the total amount of the lubricating oil composition, from the standpoint of favorably exerting the effects of the addition of the polymer composition. The content thereof is regulated to make a content of the comb-shaped polymer (X) of preferably 15% by mass or less, more preferably 12% by mass or less, and further preferably 10% by mass or less, based on the total amount of the lubricating oil composition.

The upper limit values and the lower limit values of these numerical ranges may be optionally combined. Specifically, the content thereof is regulated to preferably 0.1% by mass to 15% by mass, more preferably 0.2% by mass to 12% by mass, and further preferably 0.3% by mass to 10% by mass.

### <Lubricant Base Oil>

The lubricant base oil used may be an ordinary base oil having been used in lubricating oil compositions with no particular limitation. Specific examples thereof include one or more kind selected from the group consisting of a mineral oil and a synthetic oil.

The kinematic viscosity at 100°C of the lubricant base oil is preferably in a range of 1 mm²/s to 50 mm²/s, more preferably in a range of 2 mm²/s to 30 mm²/s, and further preferably in a range of 3 mm²/s to 20 mm²/s. The viscosity index of the lubricant base oil is preferably 80 or more, more preferably 90 or more, and further preferably 100 or more.

The kinematic viscosity and the viscosity index of the lubricant base oil are values that are measured or calculated according to JIS K2283:2000.

Specific examples of the lubricant base oil will be shown below.

Examples of the mineral oil include a distillate oil obtained by subjecting a paraffin base crude oil, an intermediate base crude oil, or naphthene base crude oil to atmospheric distillation and/or distillation under reduced pressure; and a refined oil obtained by refining the distillate oil by an ordinary method. Examples of the refining method for obtaining a refined oil include a solvent dewaxing treatment, a hydrogenation isomerization treatment, a hydrogenation finishing treatment, and a white clay treatment.

Examples of the synthetic oil include a hydrocarbon-based oil, an aromatic-based oil, an ester-based oil, and an ether-based oil. The synthetic oil used may be GTL (gas-to-liquid) obtained by isomerizing wax produced from natural gas by the Fischer-Tropsch method or the like (GTL wax, gas-to-liquid wax).

Even in the case where a lubricant base oil containing a mineral oil is used in the lubricating oil composition of the present embodiment, the lubricating oil composition can exert the effects thereof since the polymer composition is favorably dissolved in the lubricant base oil.

However, in the case where a base oil other than the hetero atom-containing base oil (Y) is used as the polymerization solvent of the comb-shaped polymer (X), and the diluting solvent of the polymer composition is a base oil other than the hetero atom-containing base oil (Y), the lubricant base oil constituting the lubricating oil composition preferably contains the hetero atom-containing base oil (Y) from the standpoint of the effects of the present invention. In this case, the content of the hetero atom-containing base oil (Y) in the lubricant base oil is preferably 5% by mass or more, more preferably 8% by mass or more, and further preferably 10% by mass or more, based on the total amount of the lubricant base oil.

In the case where the lubricant base oil constituting the lubricating oil composition contains the hetero atom-containing base oil (Y), the lubricant base oil may be formed only of the hetero atom-containing base oil (Y), and may contain a base oil (for example, a mineral oil) other than the hetero atom-containing base oil (Y). In this case, the content of the base oil (for example, a mineral oil) other than the hetero atom-containing base oil (Y) in the lubricant base oil is preferably 95% by mass or less, more preferably 92% by mass or less, and further preferably 90% by mass or less, based on the total amount of the lubricant base oil.

### <Additional Additive>

The lubricating oil composition of the present embodiment may contain an additional additive, such as an antioxidant, an oiliness agent, a detergent dispersant, a viscosity index improver, a rust inhibitor, a metal deactivator, and an anti-foaming agent, in such a range that does not impair the effects of the polymer composition. One kind thereof may be used alone, and two or more kinds thereof may be used in combination.

The present embodiment also provides an additive package for a lubricating oil composition, containing the polymer composition containing the comb-shaped polymer (X), and also containing one or more kind of an additive selected from an antioxidant, an oiliness agent, a detergent dispersant, a viscosity index improver, a rust inhibitor, a metal deactivator, an anti-foaming agent, and the like, as an additional additive other than the polymer composition containing the comb-shaped polymer (X).

### (Antioxidant)

The antioxidant used may be an amine-based antioxidant, a phenol-based antioxidant, and the like having been used in the ordinary lubricating oil composition. One kind of the antioxidant may be used alone, and two or more kinds thereof may be used in combination.

Examples of the amine-based antioxidant include a monoalkyldiphenylamine-based compound, such as monooctyldiphenylamine and monononyldiphenylamine; a dialkyldiphenylamine-based compound, such as 4,4'-dibutyldiphenylamine, 4,4'-dipentyldiphenylamine, 4,4'-dihexyldiphenylamine, 4,4'-diheptyldiphenylamine, 4,4'-dioctyldiphenylamine, and 4,4'-dinonyldiphenylamine; a polyalkyldiphenylamine-based compound, such as tetrabutyldiphenylamine, tetrahexyldiphenylamine, tetraoctyldiphenylamine, and tetranonyldiphenylamine; and a naphthylamine-based compound, such as α-naphthylamine, phenyl-α-naphthylamine, butylphenyl-α-naphthylamine, pentylphenyl-α-naphthylamine, hexylphenyl-α-naphthylamine, heptylphenyl-α-naphthylamine, octylphenyl-α-naphthylamine, and nonylphenyl-α-naphthylamine.

Examples of the phenol-based antioxidant include a monophenol-based compound, such as 2,6-di-tert-butyl-4-methylphenol and 2,6-di-tert-butyl-4-ethylphenol; and a bisphenol-based compound, such as 4,4'-methylenebis(2,6-di-tert-butylphenol) and 2,2'-methylenebis(4-ethyl-6-tert-butylphenol).

The content of the antioxidant added may be a minimum amount that is required for retaining the oxidation stability of the lubricating oil composition. Specifically, the content thereof is preferably 0.01 to 1% by mass based on the total amount of the lubricating oil composition.

### (Oiliness Agent)

Examples of the oiliness agent include an aliphatic alcohol; a fatty acid compound, such as a fatty acid and a fatty acid metal salt; an ester compound, such as a polyol ester, a sorbitan ester, and a glyceride; and an amine compound, such as an aliphatic amine.

The content of the oiliness agent is generally 0.1 to 20% by mass, and preferably 0.5 to 10% by mass, based on the total amount of the lubricating oil composition, from the standpoint of the effects of the addition thereof.

### (Detergent Dispersant)

Examples of the detergent dispersant include a metal sulfonate, a metal salicylate, a metal phenate, and a succinic imide.

The content of the detergent dispersant is generally 0.01 to 10% by mass, and preferably 0.1 to 5% by mass, based on the total amount of the lubricating oil composition, from the standpoint of the effects of the addition thereof.

### (Viscosity Index Improver)

Examples of the viscosity index improver include a non-dispersive polymethacrylate, a dispersive polymethacrylate, an olefin-based copolymer (such as an ethylene-propylene copolymer), a dispersive olefin-based copolymer, and a styrene-based copolymer (such as a styrene-diene hydrogenated copolymer).

The content of the viscosity index improver is preferably 0.3 to 5% by mass based on the total amount of the lubricating oil composition.

### (Rust Inhibitor)

Examples of the rust inhibitor include a metal-based sulfonate, a succinate ester, an alkylamine, and an alkanolamine, such as monoisopropanolamine.

The content of the rust inhibitor is generally 0.01 to 5% by mass, and preferably 0.03 to 3% by mass, based on the total amount of the lubricating oil composition, from the standpoint of the effects of the addition thereof.

### (Metal Deactivator)

Examples of the metal deactivator include benzotriazole and thiadiazole.

The preferred content of the metal deactivator is generally 0.01 to 5% by mass, and preferably 0.01 to 1% by mass, based on the total amount of the lubricating oil composition, from the standpoint of the effects of the addition thereof.

### (Anti-foaming Agent)

Examples of the anti-foaming agent include a methylsilicone oil, a fluorosilicone oil, and a polyacrylate.

The content of the anti-foaming agent is generally 0.0005 to 0.01% by mass based on the total amount of the lubricating oil composition, from the standpoint of the effects of the addition thereof.

### <Properties of Lubricating Oil Composition>

### (Kinematic Viscosity and Viscosity Index)

The 100°C kinematic viscosity of the lubricating oil composition of the present embodiment is preferably 4.0 mm²/s to 12.5 mm²/s, more preferably 4.5 mm²/s to 11.0 mm²/s, further preferably 5.0 mm²/s to 10.0 mm²/s, and still further preferably 5.5 mm²/s to 9.3 mm²/s, from the standpoint of enhancing the lubricating capability, the viscosity characteristics, and the energy saving capability.

The 40°C kinematic viscosity of the lubricating oil composition of the present embodiment is preferably 10.0 mm²/s to 40.0 mm²/s, more preferably 15.0 mm²/s to 38.0 mm²/s, further preferably 16.0 mm²/s to 30.0 mm²/s, still further preferably 17.0 mm²/s to 32.0 mm²/s, and still more further preferably 18.0 mm²/s to 30.0 mm²/s, from the standpoint of enhancing the lubricating capability, the viscosity characteristics, and the energy saving capability.

The viscosity index of the lubricating oil composition of the present embodiment is preferably 300 or more, more preferably 320 or more, and further preferably 350 or more.

The kinematic viscosity and the viscosity index of the lubricating oil composition are values that are measured or calculated according to JIS K2283:2000.

### (HTHS Viscosity at 150°C)

The HTHS viscosity at 150°C of the lubricating oil composition of the present embodiment is preferably 2.8 mPa s or less, more preferably 1.7 mPa ·s to 2.8 mPa s, further preferably 1.8 mPa s to 2.8 mPa s, still further preferably 1.9 mPa s to 2.7 mPa s, and still more further preferably 1.9 mPa s to 2.6 mPa s.

In the case where the HTHS viscosity at 150°C is in the range, it can be said that at least the viscosity that is demanded as the HTHS viscosity at 150°C is secured.

The HTHS viscosity at 150°C of the lubricating oil composition is a value that is obtained according to ASTM D4741 in such a manner that the lubricating oil composition is sheared at a shear rate of 10⁶/s under a temperature condition of 150°C, and then the viscosity thereof is measured.

### [Applications of Lubricating Oil Composition]

The polymer composition of the present embodiment is excellent in effect of enhancing the viscosity index, and simultaneously has a capability of reducing the HTHS viscosity in the effective temperature range (80°C).

Therefore, a lubricating oil composition containing the polymer composition of the present embodiment can be favorably used in various applications, for example, a drive train oil, such as a gear oil (e.g., a manual transmission fluid and a differential fluid), an automatic transmission fluid, a continuous transmission fluid (e.g., a belt CVT fluid and a toroidal CVT fluid), a power steering fluid, a shock absorber fluid, and an electric motor oil; an internal combustion engine oil for a gasoline engine, a diesel engine, a gas engine, and the like; a hydraulic actuation oil; a turbine oil; a compressor oil; a fluid dynamic bearing fluid; a rolling bearing fluid; and a refrigerator oil, and can be charged in an equipment used in the application and favorably used as a lubricating oil for lubricating devices of the equipment.

Among these, the lubricating oil composition is more preferred as a lubricating oil composition that is used in a wider temperature range due to the characteristics described above, and for example, is further preferably used as a lubricating oil for a drive train equipment, such as a gear used in an automobile, e.g., a two-wheel automobile and a four-wheel automobile, a transport machinery, e.g., an electric train, a marine vessel, and an airplane, an electric generator, and a machine tool, an automatic transmission, a continuous transmission, a shock absorber, a power steering, and an electric motor; and a lubricating oil for an internal combustion engine, e.g., a gasoline engine, a diesel engine, and a gas engine.

### [Lubricating Method using Lubricating Oil Composition]

As described for the applications, preferred examples of the lubricating method using the lubricating oil composition containing the polymer composition of the present embodiment include a method of charging the lubricating oil composition in an equipment used in the application, and lubricating devices of the equipment.

More preferred examples of the lubricating method using the lubricating oil composition include a method of charging the lubricating oil composition, for example, in a drive train equipment, such as a gear used in an automobile, e.g., a two-wheel automobile and a four-wheel automobile, a transport machinery, e.g., an electric train, a marine vessel, and an airplane, an electric generator, and a machine tool, an automatic transmission, a continuous transmission, a shock absorber, a power steering, and an electric motor; and an internal combustion engine, e.g., a gasoline engine, a diesel engine, and a gas engine; and lubricating devices of the drive train equipment or devices of the internal combustion engine.

### [Drive Train Equipment using Lubricating Oil Composition]

Another embodiment is a drive train equipment using the lubricating oil composition, and preferably a drive train equipment using the lubricating oil composition as a drive train oil. Examples of the drive train equipment include a gear used in an automobile, e.g., a two-wheel automobile and a four-wheel automobile, a transport machinery, e.g., an electric train, a marine vessel, and an airplane, an electric generator, and a machine tool, an automatic transmission, a continuous transmission, a shock absorber, a power steering, and an electric motor.

### [Internal Combustion Engine using Lubricating Oil Composition]

Still another embodiment is an internal combustion engine using the lubricating oil composition, and preferably an internal combustion engine using the lubricating oil composition as an engine oil. Examples of the internal combustion engine include a gasoline engine, a diesel engine, and a gas engine mounted on an automobile, e.g., a two-wheel automobile and a four-wheel automobile, and a transport machinery, e.g., an electric train, a marine vessel, and an airplane.

### [Embodiments of Present Invention provided]

According to one embodiment of the present invention, the following items [1] to [11] are provided.
[1] A polymer composition containing a comb-shaped polymer (X) containing the following structural units (a) to (c), and a hetero atom-containing base oil (Y),
   the structural unit (a): a structural unit derived from a short-chain alkyl (meth)acrylate (A) having a short-chain alkyl group having 1 to 5 carbon atoms,
   the structural unit (b): a structural unit derived from a long-chain alkyl (meth)acrylate (B) having a long-chain alkyl group having 6 to 32 carbon atoms, and
   the structural unit (c): a structural unit derived from a macromonomer (C),
   a content of the structural unit (a) being 70% by mass or more based on the total structural units of the comb-shaped polymer (X),
   the hetero atom-containing base oil (Y) having a kinematic viscosity at 40°C of 25 mm²/s or less.
[2] The polymer composition according to the item [1], wherein the comb-shaped polymer (X) is a copolymer obtained by polymerizing in a polymerization solvent containing the hetero atom-containing base oil (Y).
[3] The polymer composition according to the item [1] or [2], wherein the comb-shaped polymer (X) has a mass average molecular weight of 100,000 to 900,000.
[4] The polymer composition according to any one of the items [1] to [3], wherein the hetero atom-containing base oil (Y) contains an ester.
[5] A lubricating oil additive composition containing the polymer composition according to any one of the items [1] to [4].
[6] A lubricating oil composition containing the polymer composition according to any one of the items [1] to [4] or the lubricating oil additive composition according to the item [5], and a lubricant base oil.
[7] The lubricating oil composition according to the item [6], wherein the lubricant base oil contains a mineral oil.
[8] The lubricating oil composition according to the item [6] or [7], wherein the lubricating oil composition has a kinematic viscosity at 100°C of 4.0 mm²/s to 12.5 mm²/s.
[9] The lubricating oil composition according to any one of the items [1] to [8], wherein the lubricating oil composition has an HTHS viscosity at 150°C of 2.8 mPa.s or less.
[10] A method for producing the polymer composition according to the item [1], including
   a step (S1) of polymerizing a short-chain alkyl (meth)acrylate (A) having a short-chain alkyl group having 1 to 5 carbon atoms, a long-chain alkyl (meth)acrylate (B) having a long-chain alkyl group having 6 to 32 carbon atoms, and a macromonomer (C), so as to produce a comb-shaped polymer (X), and
   a step (S2) of dissolving the comb-shaped polymer (X) in a hetero atom-containing base oil (Y),
   in the step (S1), an amount of the short-chain alkyl (meth)acrylate (A) blended being 70% by mass or more based on the total amount of the short-chain alkyl (meth)acrylate (A), the long-chain alkyl (meth)acrylate (B), and the macromonomer (C),
   the hetero atom-containing base oil (Y) having a kinematic viscosity at 40°C of 25 mm²/s or less.
[11] The method for producing the polymer composition according to the item [10], wherein
   the hetero atom-containing base oil (Y) is used as a polymerization solvent in the step (S1), and
   the step (S2) is optionally performed.

### Examples

The present invention will be described more specifically with reference to examples below, but the present invention is not limited to the examples below.

### [Measurement Methods of Property Values]

The properties of the raw materials used in Examples and Comparative Examples and the lubricating oil compositions of Examples and Comparative Examples were measured according to the following manner.

### (1) Kinematic Viscosity and Viscosity Index

The 40°C kinematic viscosity, the 100°C kinematic viscosity, and the viscosity index of the base oils and the lubricating oil compositions were measured or calculated according to JIS K2283:2000.

### (2) HTHS Viscosity

According to ASTM D4741, the lubricating oil composition was sheared at a shear rate of 10⁶/s under a temperature condition of 80°C or 150°C, and then the HTHS viscosity thereof was measured.

### (3) Mass Average Molecular Weight (Mw) and Molecular Weight Distribution (Mw/Mn)

One column of "TSKguardcolumn Super HZ-L" and two columns of "TSKSuperMultipore HZ-M", produced by Tosoh Corporation were installed in "1515 Isocratic HPLC pump" and "2414 Differential Refractometer (RI) Detector", produced by Waters Corporation, in this order from the upstream side, and the molecular weights were measured in terms of standard polystyrene conversion under conditions of a measurement temperature of 40°C, a mobile phase of tetrahydrofuran, a flow rate of 0.35 mL/min, and a sample concentration of 1.0 mg/mL.

### [Examples 1 to 10 and Comparative Examples 1 to 3]

The lubricating oil compositions of Examples 1 to 10 and Comparative Examples 1 to 3 were prepared by the methods described below.

### <Raw Materials>

### (Monomer)

### Monomer (A): n-butyl methacrylate

Produced by Alfa Aesar
n-butyl methacrylate is a compound represented by the general formula (a-1), wherein R^{a1} represents a methyl group, R^{a3} represents a n-butyl group (which is a linear alkyl group having 4 carbon atoms), X^{a1} represents -O-, and ma1 = 0.

In the following description, n-butyl methacrylate may be abbreviated as "nC4-MA".

### Monomer (B): Mixture of n-dodecyl methacrylate and n-tridecyl methacrylate

Produced by Kyoeisha Chemical Co., Ltd., product name: "Light Ester L-7"
n-dodecyl methacrylate is a compound represented by the general formula (b-1), wherein R^{b1} represents a methyl group, R^{b3} represents a n-dodecyl group (which is a linear alkyl group having 12 carbon atoms), X^{b1} represents -O-, and mb1 = 0.
n-tridecyl methacrylate is a compound represented by the general formula (b-1), wherein R^{b1} represents a methyl group, R^{b3} represents a n-tridecyl group (which is a linear alkyl group having 13 carbon atoms), X^{b1} represents -O-, and mb1 = 0.

In the following description, the mixture of n-dodecyl methacrylate and n-tridecyl methacrylate may be abbreviated as "C1213-MA".

### Macromonomer (C)

The macromonomer (C) used was a one-end methacrylated hydrogenated polybutadiene having a structural unit derived from hydrogenated butadiene having one methacrylated end (Kraton Liquid (registered trademark) L-1253, produced by Kuraray Co., Ltd.).

The mass average molecular weight thereof was approximately 7,000, and the number average molecular weight thereof was approximately 6,800.

### (Polymerization Solvent and Lubricant Base Oil)

### Base oil H1: Trimethylolpropane ester

Produced by NOF Corporation, product name: "Unistar (registered trademark) H-334R"
Mixed triester of trimethylolpropane, and lauric acid and stearic acid
100°C kinematic viscosity: 4.3 mm²/s, 40°C kinematic viscosity: 19.6 mm²/s, viscosity index: 139

### Base oil H2: bis(2-Ethylhexyl) sebacate

100°C kinematic viscosity: 3.2 mm²/s, 40°C kinematic viscosity: 11.3 mm²/s Base oil H3: bis(2-Ethylhexyl) ether
100°C kinematic viscosity: 1.0 mm²/s, 40°C kinematic viscosity: 2.2 mm²/s Base oil H4: bis(2-Ethylhexyl) adipate
100°C kinematic viscosity: 2.3 mm²/s, 40°C kinematic viscosity: 7.6 mm²/s Base oil A: Mineral oil
100°C kinematic viscosity: 4.2 mm²/s, 40°C kinematic viscosity: 19.4 mm²/s, viscosity index: 124

### (Radical Polymerization Initiator)

Pertetra A: 2,2-bis(4,4-di-t-butylperoxycyclohexyl)propane (produced by NOF Corporation) was used.

### <Example 1>

### (Production Example 1: Production of polymer composition (VME1) containing comb-shaped polymer (X-1))

In a four-neck separable flask equipped with a thermometer, a Dimroth condenser, a vacuum-sealed agitator, a nitrogen flow inlet, and a nitrogen flow outlet, 32.85 g of nC4-MA, 3.60 g of C1213-MA, 8.55 g of the macromonomer, 45 g of the base oil H1 as a polymerization solvent, and 0.51 g of Pertetra A were charged, and purged with nitrogen. The mixture was heated under agitation under a nitrogen flow (nitrogen gas: 50 mL/min) at a bath temperature of 100°C. After 2 hours, at the time when viscosity increase was confirmed, 135 g of the base oil H1 was added, and the mixture was further heated under agitation for 8 hours. Thereafter, after allowing to stand overnight, the mixture was heated to 100°C under agitation for 8 hours, and then the unreacted monomers were distilled off under reduced pressure (0.02 MPa or less) at 120 to 130°C for 2 hours, so as to provide a polymer composition (VME1) containing a comb-shaped polymer (X-1). The content ratio (mass ratio) of the comb-shaped polymer (X-1) and the polymerization solvent in the polymer composition (VME1) was 20/80.

### (Preparation Example 1: Preparation of lubricating oil composition (E1) containing polymer composition (VME1))

The polymer composition (VME1) was added and mixed with the base oil A as a lubricant base oil at the ratio shown in Table 1 to make an HTHS viscosity at 150°C of the lubricating oil composition of 2.6 mPa s, so as to prepare a lubricating oil composition (E1) containing the polymer composition (VME1).

### <Example 2>

### (Production Example 2: Production of polymer composition (VME2) containing comb-shaped polymer (X-2))

A polymer composition (VME2) containing a comb-shaped polymer (X-2) was obtained in the same manner as in Production Example 1 except that the base oil H2 was used instead of the base oil H1.

### (Preparation Example 2: Preparation of lubricating oil composition (E2) containing polymer composition (VME2))

A lubricating oil composition (E2) containing the polymer composition (VME2) was prepared in the same manner as in Preparation Example 1 using the base oil A as the lubricant base oil.

### <Example 3>

### (Production Example 3: Production of polymer composition (VME3) containing comb-shaped polymer (X-3))

A polymer composition (VME3) containing a comb-shaped polymer (X-3) was obtained in the same manner as in Production Example 1 except that the base oil H3 was used instead of the base oil H1.

### (Preparation Example 3: Preparation of lubricating oil composition (E3) containing polymer composition (VME3))

A lubricating oil composition (E3) containing the polymer composition (VME3) was prepared in the same manner as in Preparation Example 1 using the base oil A as the lubricant base oil.

### <Example 4>

### (Production Example 4: Production of polymer composition (VME4) containing comb-shaped polymer (X-4))

A polymer composition (VME4) containing a comb-shaped polymer (X-4) was obtained in the same manner as in Production Example 1 except that the base oil A was used instead of the base oil H1.

### (Preparation Example 4: Preparation of lubricating oil composition (E4) containing polymer composition (VME4))

For confirming the effect of the post addition of the hetero atom-containing base oil (Y) to the comb-shaped polymer (X) that was obtained without the use of the hetero atom-containing base oil (Y) as the polymerization solvent, a lubricating oil composition (E4) containing the polymer composition (VME4) was prepared in the same manner as in Preparation Example 1 except that a mixed base oil of the base oil A and the base oil H2 was used as the lubricant base oil.

### <Comparative Example 1>

A lubricating oil composition (C1) containing the polymer composition (VME4) was prepared in the same manner as in Preparation Example 1 using the base oil A as the lubricant base oil.

### <Example 5>

### (Production Example 5: Production of polymer composition (VME5) containing comb-shaped polymer (X-5))

A polymer composition (VME5) containing a comb-shaped polymer (X-5) was obtained in the same manner as in Production Example 1 except that the amounts of nC4-MA, C1213-MA, and the macromonomer charged were changed as follows.
nC4-MA: 34.65 g
C1213-MA: 3.6 g
Macromonomer: 6.75 g

### (Preparation Example 5: Preparation of lubricating oil composition (E5) containing polymer composition (VME5))

A lubricating oil composition (E5) containing the polymer composition (VME5) was prepared in the same manner as in Preparation Example 1 using the base oil A as the lubricant base oil.

### <Example 6>

### (Production Example 6: Production of polymer composition (VME6) containing comb-shaped polymer (X-6))

A polymer composition (VME6) containing a comb-shaped polymer (X-7) was obtained in the same manner as in Production Example 1 except that the base oil H3 was used instead of the base oil H1.

### (Preparation Example 6: Preparation of lubricating oil composition (E6) containing polymer composition (VME6))

A lubricating oil composition (E6) containing the polymer composition (VME6) was prepared in the same manner as in Preparation Example 1 using the base oil A as the lubricant base oil.

### <Example 7>

### (Production Example 7: Production of polymer composition (VME7) containing comb-shaped polymer (X-7))

A polymer composition (VME7) containing a comb-shaped polymer (X-7) was obtained in the same manner as in Production Example 1 except that the base oil H4 was used instead of the base oil H1.

### (Preparation Example 7: Preparation of lubricating oil composition (E7) containing polymer composition (VME7))

A lubricating oil composition (E7) containing the polymer composition (VME7) was prepared in the same manner as in Preparation Example 1 using the base oil A as the lubricant base oil.

### <Comparative Example 2>

A lubricating oil composition (C2) containing a polymer composition (VMC2) was prepared in the same manner as in Preparation Example 1 using the base oil A as the lubricant base oil.

### <Example 8>

### (Production Example 8: Production of polymer composition (VME8) containing comb-shaped polymer (X-8))

A polymer composition (VME8) containing a comb-shaped polymer (X-8) was obtained in the same manner as in Production Example 1 except that the amounts of nC4-MA, C1213-MA, and the macromonomer charged were changed as follows.
nC4-MA: 37.35 g
C1213-MA: 2.25 g
Macromonomer: 5.40 g

### (Preparation Example 8: Preparation of lubricating oil composition (E8) containing polymer composition (VME8))

A lubricating oil composition (E8) containing the polymer composition (VME8) was prepared in the same manner as in Preparation Example 1 using the base oil A as the lubricant base oil.

### <Example 9>

### (Production Example 9: Production of polymer composition (VME9) containing comb-shaped polymer (X-9))

A polymer composition (VME9) containing a comb-shaped polymer (X-9) was obtained in the same manner as in Production Example 5 except that the base oil H2 was used instead of the base oil H1.

### (Preparation Example 9: Preparation of lubricating oil composition (E9) containing polymer composition (VME9))

A lubricating oil composition (E9) containing the polymer composition (VME9) was prepared in the same manner as in Preparation Example 1 using the base oil A as the lubricant base oil.

### <Example 10>

### (Production Example 10: Production of polymer composition (VME10) containing comb-shaped polymer (X-10))

A polymer composition (VME10) containing a comb-shaped polymer (X-10) was obtained in the same manner as in Production Example 5 except that the base oil H4 was used instead of the base oil H1.

### (Preparation Example 10: Preparation of lubricating oil composition (E10) containing polymer composition (VME10))

A lubricating oil composition (E10) containing the polymer composition (VME10) was prepared in the same manner as in Preparation Example 1 using the base oil A as the lubricant base oil.

### <Comparative Example 3>

### (Comparative Production Example 1)

Polymerization was performed in the same manner as in Production Example 10 except that the base oil A was used instead of the base oil H1. However, white turbidity (gelation) occurred during the polymerization. Therefore, a lubricating oil composition was not prepared.

### (Evaluation Method)

The lubricating oil compositions prepared in the aforementioned manner each were measured for the 40°C kinematic viscosity, the 100°C kinematic viscosity, the HTHS viscosity at 150°C, and the HTHS viscosity at 80°C.

### (Evaluation Standard)

Examples and Comparative Example having the same blending ratio of the monomers (A), (B), and (C) were compared, and a lubricating oil composition having a viscosity index larger than Comparative Example and an HTHS viscosity at 80°C smaller than Comparative Example was judged as acceptable.

For Examples 8 to 10, there was no corresponding comparative example since white turbidity (gelation) occurred during the polymerization process in Comparative Example 3 as the target for comparison, and therefore a lubricating oil composition satisfying the following standard was judged as acceptable.
Viscosity index: 300 or more
HTHS Viscosity at 80°C: 5.90 or less

The results are shown in Tables 1 to 3.

**Table 1**

| | | | Example 1 | Example 2 | Example 3 | Example 4 | Comparative Example 1 |
|---|---|---|---|---|---|---|---|
| Raw materials | Monomer composition (% by mass) | Monomer (A): nC4-MA | 73 | 73 | 73 | 73 | 73 |
| | | Monomer (B): C1213-MA | 8 | 8 | 8 | 8 | 8 |
| | | Macromonomer (C) | 19 | 19 | 19 | 19 | 19 |
| | | Total | 100 | 100 | 100 | 100 | 100 |
| | Monomer composition (% by mol) | Monomer (A): nC4-MA | 94.23 | 94.23 | 94.23 | 94.23 | 94.23 |
| | | Monomer (B): C1213-MA | 5.77 | 5.77 | 5.77 | 5.77 | 5.77 |
| | | Macromonomer (C) | 0.5 | 0.5 | 0.5 | 0.5 | 0.5 |
| | | Total | 100 | 100 | 100 | 100 | 100 |
| | Polymerization solvent | | Base oil H1 | Base oil H2 | Base oil H3 | Base oil A | Base oil A |
| Polymer composition | | Name of polymer composition | VME1 | VME2 | VME3 | VME4 | VME4 |
| | | Copolymer (% by mass) | 20 | 20 | 20 | 20 | 20 |
| | | Polymerization solvent (% by mass) | 80 | 80 | 80 | 80 | 80 |
| Properties of comb-shaped polymer | | Name of comb-shaped polymer | X-1 | X-2 | X-3 | X-4 | X-4 |
| | | Mn | 416,820 | 359,000 | 123,000 | 247,567 | 247,567 |
| | | Mw | 821,705 | 524,000 | 270,000 | 490,209 | 490,209 |
| | | Mw/Mn | 1.97 | 1.46 | 2.20 | 1.98 | 1.98 |
| Lubricating oil composition | | Name of lubricating oil composition | E1 | E2 | E3 | E4 | C1 |
| | | Polymer composition used | VME1 | VME2 | VME3 | VME4 | VME4 |
| | | Comb-shaped polymer (% by mass, including polymerization solvent) | 13.26 | 16.17 | 30.68 | 14.70 | 16.00 |
| | | Comb-shaped polymer (% by mass, resin content) | 2.65 | 3.23 | 6.14 | 2.94 | 3.20 |
| | | Base oil A (% by mass) | 86.74 | 83.83 | 69.32 | 73.54 | 84.00 |
| | | Base oil H2 (% by mass) | - | - | - | 11.76 | 0.00 |
| Viscosity characteristics of lubricating oil composition | | HTHS (80°C) unit: mPa·s | 6.01 | 6.07 | 4.92 | 5.85 | 6.15 |
| | | HTHS (150°C) unit: mPa·s | 2.60 | 2.60 | 2.60 | 2.60 | 2.60 |
| | | 40°C Kinematic viscosity unit: mm²/s | 23.13 | 22.36 | 16.04 | 22.43 | 23.05 |
| | | 100°C Kinematic viscosity unit: mm²/s | 8.94 | 8.17 | 6.93 | 7.88 | 6.56 |
| | | Viscosity index | 411 | 384 | 472 | 365 | 267 |

**Table 2**

| | | | Example 5 | Example 6 | Example 7 | Comparative Example 2 |
|---|---|---|---|---|---|---|
| Raw materials | Monomer composition (% by mass) | Monomer (A): nC4-MA | 77 | 77 | 77 | 77 |
| | | Monomer (B): C1213-MA | 8 | 8 | 8 | 8 |
| | | Macromonomer (C) | 15 | 15 | 15 | 15 |
| | | Total | 100 | 100 | 100 | 100 |
| | Monomer composition (% by mol) | Monomer (A): nC4-MA | 94.16 | 94.16 | 94.16 | 94.16 |
| | | Monomer (B): C1213-MA | 5.47 | 5.47 | 5.47 | 5.47 |
| | | Macromonomer (C) | 0.37 | 0.37 | 0.37 | 0.37 |
| | | Total | 100 | 100 | 100 | 100 |
| | Polymerization solvent | | Base oil H1 | Base oil H3 | Base oil H4 | Base oil A |
| Polymer composition | | Name of polymer composition | VME5 | VME6 | VME7 | VMC2 |
| | | Copolymer (% by mass) | 20 | 20 | 20 | 20 |
| | | Polymerization solvent (% by mass) | 80 | 80 | 80 | 80 |
| Properties of comb-shaped polymer | | Name of comb-shaped polymer | X-5 | X-6 | X-7 | X'-1 |
| | | Mn | 427,284 | 53,900 | 186,000 | 287,162 |
| | | Mw | 798,349 | 148,000 | 414,000 | 633,507 |
| | | Mw/Mn | 1.87 | 2.75 | 2.23 | 2.21 |
| Lubricating oil composition | | Name of lubricating oil composition | E5 | E6 | E7 | C2 |
| | | Polymer composition used | VME5 | VME6 | VME7 | VMC2 |
| | | Comb-shaped polymer (% by mass, including polymerization solvent) | 14.12 | 36.63 | 18.07 | 17.95 |
| | | Comb-shaped polymer (% by mass, resin content) | 2.82 | 7.33 | 3.61 | 3.59 |
| | | Base oil A (% by mass) | 85.88 | 63.37 | 81.93 | 82.05 |
| | | Base oil H2 (% by mass) | - | - | - | 0.00 |
| Viscosity characteristics of lubricating oil composition | | HTHS (80°C) unit: mPa·s | 5.74 | 5.50 | 5.71 | 5.89 |
| | | HTHS (150°C) unit: mPa·s | 2.60 | 2.60 | 2.60 | 2.60 |
| | | 40°C Kinematic viscosity unit: mm²/s | 22.25 | 16.00 | 21.18 | 23.99 |
| | | 100°C Kinematic viscosity unit: mm²/s | 8.13 | 6.63 | 8.07 | 6.21 |
| | | Viscosity index | 384 | 447 | 404 | 229 |

**Table 3**

| | | | Example 8 | Example 9 | Example 10 | Comparative Example 3 |
|---|---|---|---|---|---|---|
| Raw materials | Monomer composition (% by mass) | Monomer (A): nC4-MA | 83 | 83 | 83 | 83 |
| | | Monomer (B): C1213-MA | 5 | 5 | 5 | 5 |
| | | Macromonomer (C) | 12 | 12 | 12 | 12 |
| | | Total | 100 | 100 | 100 | 100 |
| | Monomer composition (% by mol) | Monomer (A): nC4-MA | 95.26 | 95.26 | 95.26 | 95.26 |
| | | Monomer (B): C1213-MA | 4.36 | 4.36 | 4.36 | 4.36 |
| | | Macromonomer (C) | 0.38 | 0.38 | 0.38 | 0.38 |
| | | Total | 100 | 100 | 100 | 100 |
| | Polymerization solvent | | Base oil H1 | Base oil H2 | Base oil H4 | Base oil A |
| Polymer composition | | Name of polymer composition | VME8 | VME9 | VME10 | VMC1 |
| | | Copolymer (% by mass) | 20 | 20 | 20 | 20 |
| | | Polymerization solvent (% by mass) | 80 | 80 | 80 | 80 |
| Properties of comb-shaped polymer | | Name of comb-shaped polymer | X-8 | X-9 | X-10 | X'-2 |
| | | Mn | 195,000 | 150,607 | 180,000 | 298,835 |
| | | Mw | 421,000 | 343,144 | 389,000 | 581,154 |
| | | Mw/Mn | 2.16 | 2.28 | 2.16 | 1.94 |
| Lubricating oil composition | | Name of lubricating oil composition | E8 | E9 | E10 | - |
| | | Polymer composition used | VME8 | VME9 | VME10 | - |
| | | Comb-shaped polymer (% by mass, including polymerization solvent) | 15.61 | 17.68 | 18.18 | - |
| | | Comb-shaped polymer (% by mass, resin content) | 3.12 | 3.54 | 3.64 | - |
| | | Base oil A (% by mass) | 84.39 | 82.32 | 81.82 | - |
| | | Base oil H2 (% by mass) | - | - | - | - |
| Viscosity characteristics of lubricating oil composition | | HTHS (80°C) unit: mPa·s | 5.75 | 5.73 | 5.43 | - |
| | | HTHS (150°C) unit: mPa·s | 2.60 | 2.60 | 2.60 | - |
| | | 40°C Kinematic viscosity unit: mm²/s | 22.69 | 21.22 | 20.29 | - |
| | | 100°C Kinematic viscosity unit: mm²/s | 7.25 | 6.93 | 7.27 | - |
| | | Viscosity index | 320 | 327 | 372 | - |

The following maters are understood from Table 1.

It is understood that the lubricating oil compositions E1 to E4 of Examples 1 to 4 each have a higher viscosity index and a lower HTHS viscosity at 80°C than the lubricating oil composition C1 of Comparative Example 1.

The following maters are understood from Table 2.

It is understood that the lubricating oil compositions E5 to E7 of Examples 5 to 7 each have a higher viscosity index and a lower HTHS viscosity at 80°C than the lubricating oil composition C2 of Comparative Example 2.

The following maters are understood from Table 3.

It is understood that the lubricating oil compositions E8 to E10 of Examples 8 to 10 each have a high viscosity index and a low HTHS viscosity at 80°C.

## Claims

1. A polymer composition comprising a comb-shaped polymer (X) comprising the following structural units (a) to (c), and a hetero atom- comprising base oil (Y),
the structural unit (a): a structural unit derived from a short-chain alkyl (meth)acrylate (A) having a short-chain alkyl group having 1 to 5 carbon atoms,
the structural unit (b): a structural unit derived from a long-chain alkyl (meth)acrylate (B) having a long-chain alkyl group having 6 to 32 carbon atoms, and
the structural unit (c): a structural unit derived from a macromonomer (C),
a content of the structural unit (a) being 70% by mass or more based on the total structural units of the comb-shaped polymer (X),
the hetero atom-comprising base oil (Y) having a kinematic viscosity at 40°C of 25 mm²/s or less.

2. The polymer composition according to claim 1, wherein the comb-shaped polymer (X) is a copolymer obtained by polymerizing in a polymerization solvent comprising the hetero atom-comprising base oil (Y).

3. The polymer composition according to claim 1 or 2, wherein the comb-shaped polymer (X) has a mass average molecular weight of 100,000 to 900,000.

4. The polymer composition according to any one of claims 1 to 3, wherein the hetero atom-comprising base oil (Y) comprises an ester.

5. A lubricating oil additive composition comprising the polymer composition according to any one of claims 1 to 4.

6. A lubricating oil composition comprising the polymer composition according to any one of claims 1 to 4 or the lubricating oil additive composition according to claim 5, and a lubricant base oil.

7. The lubricating oil composition according to claim 6, wherein the lubricant base oil comprises a mineral oil.

8. The lubricating oil composition according to claim 6 or 7, wherein the lubricating oil composition has a kinematic viscosity at 100°C of 4.0 mm²/s to 12.5 mm²/s.

9. The lubricating oil composition according to any one of claims 6 to 8, wherein the lubricating oil composition has an HTHS viscosity at 150°C of 2.8 mPa·s or less.

10. A method for producing the polymer composition according to claim 1, comprising
a step (S 1) of polymerizing a short-chain alkyl (meth)acrylate (A) having a short-chain alkyl group having 1 to 5 carbon atoms, a long-chain alkyl (meth)acrylate (B) having a long-chain alkyl group having 6 to 32 carbon atoms, and a macromonomer (C), so as to produce a comb-shaped polymer (X), and
a step (S2) of dissolving the comb-shaped polymer (X) in a hetero atom-comprising base oil (Y),
in the step (S1), an amount of the short-chain alkyl (meth)acrylate (A) blended being 70% by mass or more based on the total amount of the short-chain alkyl (meth)acrylate (A), the long-chain alkyl (meth)acrylate (B), and the macromonomer (C),
the hetero atom-comprising base oil (Y) having a kinematic viscosity at 40°C of 25 mm²/s or less.

11. The method for producing the polymer composition according to claim 10, wherein
the hetero atom-comprising base oil (Y) is used as a polymerization solvent in the step (S1), and
the step (S2) is optionally performed.
